# EUROPÄISCHE PATENTANMELDUNG

(11) **EP 4 840 373 A1**
(43) Veröffentlichungstag der Anmeldung: **18.11.2026**
(21) Anmeldenummer: 26176302.3
(22) Anmeldetag: 04.05.2026
(51) Int. Cl.: A47J 31/60, A47J 31/44, A47J 31/52

(54) **GETRÄNKEZUBEREITUNGSVORRICHTUNG UND VERFAHREN ZUR VERBESSERUNG VON HYGIENEBEDINGUNGEN**

(30) Priorität: 12.05.2025 DE 102025118060
(71) Anmelder: Eugster/Frismag AG, 8580 Amriswil (CH)
(72) Erfinder: Wäger, Simon, 8580 Amriswil (CH); Frei, Nicolas, 9320 Arbon (CH)
(74) Vertreter: advotec.

(57) **Zusammenfassung**

Getränkezubereitungsvorrichtung mit einem Auffangbehälter für, insbesondere loses oder portioniertes, feuchtes Getränkesubstrat, wobei der Auffangbehälter eine Öffnung aufweist oder Öffnungsflächen umfasst, über die der Auffangbehälter mit einem Innenraum der Getränkezubereitungsvorrichtung in Verbindung steht, mit einer, bevorzugt akustische und/oder optische, Ausgabeeinheit, mittels der ein akustisches oder optisches Signal ausgebbar ist, wenn und/oder solange im Auffangbehälter Getränkesubstrat angeordnet ist.

## Beschreibung

Die vorliegende Erfindung betrifft eine Getränkezubereitungsvorrichtung gemäß den Merkmalen des Oberbegriffs 1. Ferner betrifft die vorliegende Erfindung ein Verfahren zum Betrieb einer Getränkezubereitungsvorrichtung nach dem Oberbegriff des Anspruchs 7.

Aus dem Stand der Technik sind verschiedene Arten von Getränkezubereitungsvorrichtungen und Verfahren zu deren Betrieb bekannt. Sehr verbreitet sind Kaffeemaschinen in unterschiedlichen Ausgestaltungen. Es existieren jedoch auch Teezubereitungsvorrichtungen und auch andere Zubereitungsvorrichtungen für weitere Getränke. Bei verschiedenen Gattungen von Getränkezubereitungsvorrichtungen, insbesondere bei Kaffee- oder Teezubereitungsvorrichtungen kommen regelmäßig Getränkesubstrate zum Einsatz, die vollständig oder wenigstens teilweise organischen Ursprungs sind. Diese Getränkesubstrate, wie beispielsweise Tee, insbesondere getrocknete Teeblätter, Kaffeebohnen oder Kaffeebohnenmehl, gegebenenfalls ergänzt durch Zusätze, wie beispielsweise Aromen, Milchpulver oder dergleichen, werden bei Getränkezubereitungsvorrichtungen im Stand der Technik oft mit einem Brühfluid, beispielsweise Wasser versetzt, ausgelaugt oder aufgebrüht. Vorliegend sollen, auch wenn von Brühfluid die Rede ist, auch solche Getränke und Getränkezubereitungsvorrichtungen von der vorliegenden Offenbarung, insbesondere von der nachfolgend offenbarten Erfindung, umfasst sein, bei denen das Brühfluid kalt oder unerhitzt zum Einsatz kommt. Zum Abschluss eines Getränkezubereitungsprozesses, mitunter auch als Getränkebezug bezeichnet, bleibt in gattungsgemäßen Getränkezubereitungsvorrichtungen, insbesondere bei sogenannten Vollautomaten oftmals das Getränkesubstrat in der Getränkezubereitungsvorrichtung zurück oder wird dort zumindest übergangsweise gelagert, also zwischengelagert. Dazu kommen regelmäßig Auffangbehälter im Inneren oder innerhalb eines Gehäuses der Getränkezubereitungsvorrichtung zum Einsatz, in denen das Getränkesubstrat aufgefangen und bevorratet wird. Diese werden, gerade bei Kaffee- und/oder Espressomaschinen mitunter auch als Tresterschale oder Tresterbehälter bezeichnet. Die Auffangbehälter sind regelmäßig entnehmbar ausgestaltet, um Getränkesubstrat zu entsorgen.

Die Umweltbedingungen in einer solchen Getränkezubereitungsvorrichtung bieten leider optimale Bedingungen für das Wachstum von Pilzen, insbesondere Schimmelpilzen. Diese wiederum können negative Auswirkungen auf die Hygiene der Getränkezubereitungsvorrichtung und auch auf die Hygiene und Qualität der erzeugten Getränke haben. Denn im Inneren von bekannten Getränkezubereitungsvorrichtungen ist es oftmals dunkel, warm, feucht und das - zumindest zwischengelagerte - Getränkesubstrat bietet, insbesondere mit seinen organischen Bestandteilen, einen geeigneten Nährboden für Pilze, insbesondere Schimmelpilze.

Eine besondere Problematik entsteht dadurch, dass eine "Infektion" der Getränkezubereitungsvorrichtung mit einem Pilz, insbesondere einem Schimmelpilz schlecht bis überhaupt nicht reversibel oder ausräumbar ist. Hat sich der Pilz, insbesondere der Schimmel, ein erstes Mal etablieren und ausbreiten können, verteilen sich dessen Sporen in Form einer Wolke an unterschiedlichsten Stellen im Innenraum der Getränkezubereitungsvorrichtung und begünstigen ein erneutes Pilzwachstum und/oder Schimmelwachstum. Nach einer Kontamination ist der Ursprungszustand der Getränkezubereitungsvorrichtung praktisch kaum wieder herstellbar. Es bestehen zwar allgemein bekannte Vorgehensweisen, zum Dekontaminieren von Pilzbefall oder Schimmelbefall, diese eignen sich aber nicht im Zusammenhang mit den bekannten Getränkezubereitungsvorrichtungen, weil diese entweder die Funktion der Getränkezubereitungsvorrichtung beeinträchtigen würden oder einen enormen Wartungsaufwand darstellen.

Beispielsweise würde ein Erwärmen von Teilen der Getränkezubereitungsvorrichtung, wie beispielsweise einer Brüheinheit, Pilzsporen oder Schimmelsporen abtöten, die notwendigen Temperaturen würden mit hoher Wahrscheinlichkeit aber auch dazu führen, dass sich die erwärmten Bauteile deformieren und so die Funktionalität eingeschränkt oder zerstört werden würde. Auch bekannte Desinfektionsmittel, wie beispielsweise Alkohol, die zum Abtöten oder Entfernen von Pilzsporen eingesetzt werden, könnten im Inneren einer Getränkezubereitungsvorrichtung nur dann effektiv eingesetzt werden, wenn diese weitgehend zerlegt werden würden.

Außerdem ist aus dem Stand der Technik bereits ein Ansatz bekannt, in dem eine Wasserverdunstung in einem Auffangbehälter betrieben wird, um dann lokal durch den Wasserdampf so hohe Temperaturen zu generieren, dass eine Schimmelbildung vermieden und/oder Schimmelsporen abgetötet werden. Ein solcher Ansatz, der beispielsweise in der WO 2020/109040 A1 beschrieben wird, hat jedoch den Nachteil, dass dieser technisch komplex und zudem sehr energieintensiv ist.

Ein weiter Ansatz geht aus der EP 3 027 095 A1 hervor. Darin wird eine Lösung beschrieben, bei der eine Einweg-Alufolie zum Einsatz kommt, mit der die Entfernung von Schimmel aus dem Auffangbehälter verbessert oder erleichtert werden soll. Diese Lösung adressiert aber nur die Symptomatik eines Pilzbefalls oder einer Pilzkontamination, kann jedoch im Hinblick auf die nach wie vor bestehende Sporenkontamination im Inneren der Getränkezubereitungsvorrichtung keine Abhilfe schaffen.

Auch ist im Stand der Technik bereits hinlänglich bekannt, dass der Benutzer durch eine oftmals optische Ausgabe der Getränkezubereitungsvorrichtung nach einer vorgegebenen Anzahl an Getränkezubereitungen auf ein Erreichen einer Kapazitätsgrenze des Auffangbehälters hingewiesen wird. Je nach Nutzungsfrequenz kann bis zum Erreichen der Kapazitätsgrenze aber eine sehr lange Zeit vergehen in der das feuchte Getränkesubstrat als "Nährboden" für Pilze oder Schimmelpilze wirken kann.

Ausgehend von dem beschriebenen Stand der Technik ist es folglich die Aufgabe der vorliegenden Erfindung eine Getränkezubereitungsvorrichtung sowie ein Verfahren zum Betrieb einer Getränkezubereitungsvorrichtung vorzuschlagen, die zuverlässig eine Kontamination und/oder Ausbreitung von Pilzen, insbesondere Schimmelpilzen, in gattungsgemäßen Getränkezubereitungsvorrichtungen vermeidet.

Die Aufgabe wird hinsichtlich der Getränkezubereitungsvorrichtung mit den Merkmalen des Anspruchs 1 gelöst. Bezüglich eines Verfahrens zum Betrieb einer Getränkezubereitungsvorrichtung wird die Aufgabe mit einem Verfahren mit den Merkmalen des Anspruchs 5 gelöst.

Vorteilhafte Ausführungsformen der Erfindung sind Gegenstand der nachfolgenden Beschreibung, Figurenbeschreibung, der Figuren sowie der Unteransprüche.

Grundsätzlich, insbesondere zur Vermeidung von unnötigen Wiederholungen, sollen nachfolgend alle vorrichtungsmäßig offenbarten Merkmale auch als verfahrensmäßig offenbart und beanspruchbar gelten, sowie umgekehrt.

Die Getränkezubereitungsvorrichtung im Sinne der vorliegenden Erfindung umfasst einen Auffangbehälter für, insbesondere loses oder portioniertes, feuchtes Getränkesubstrat. Der Auffangbehälter weist dabei eine Öffnung oder Öffnungsflächen auf. Die Öffnung oder die Öffnungsflächen sorgen dafür, dass der Auffangbehälter mit einem Innenraum der Getränkezubereitungsvorrichtung in Verbindung steht und dadurch bevorzugt feuchtes Getränkesubstrat nach einem Getränkebezug oder Getränkeherstellungsprozess in den Auffangbehälter überführbar sind. Bevorzugt erfolgt die Überführung von einer Brüheinheit in den Auffangbehälter.

Erfindungsgemäß ist dabei vorgesehen, dass eine, bevorzugt akustische und/oder optische, Ausgabeeinheit vorgesehen ist, mittels der ein akustisches oder optisches Signal ausgebbar ist, wenn und/oder solange im Auffangbehälter Getränkesubstrat angeordnet ist..

Die Erfindung hat erkannt, dass eine, möglichst regelmäßige Entleerung des Auffangbehälters eine sehr effektive Möglichkeit zur Vermeidung der Ansiedelung und/oder Ausbreitung von Pilzen und/oder Sporen ist. Über die Ausgabeeinheit kann der Benutzer besonders einfach und effektiv und energiesparend an die Leerung des Auffangbehälters erinnert werden, so dass einerseits abseits der Ausgabeeinheit selbst kein technischer Mehraufwand nötig ist und besonders effektive die Pilz- oder Schimmelbildung vermieden werden kann.

Die Ausgabeeinheit ist bevorzugt als separate Ausgabeeinheit nur zum Zweck des Hinweises auf Getränkesubstrat im Auffangbehälter ausgebildet und unterscheidet sich damit von anderen, gattungsgemäßen Ausgabeeinheiten der Getränkezubereitungsvorrichtung, die bevorzugt multifunktional ausgebildet sind. Die Ausgabeeinheit kann vorteilhaft so ausgebildet sein, dass die Aktivierung zwar eventuell nicht sofort oder unmittelbar anschließend an die Einführung oder Überführung von Getränkesubstrat in den Auffangbehälter erfolgt, dass aber die Aktivierung unabhängig von einem Befüllungsgrad oder einer Kapazitätsgrenze des Auffangbehälters grundsätzlich kausal verknüpft mit jeder Getränkezubereitung und/oder Aufnahme von Getränkesubstrat erfolgt, solange keine Leerung des Auffangbehälters erfolgt. Damit unterscheidet sich die Ausgabeeinheit grundsätzlich von Ausgaben oder Ausgabeeinheiten, die auf das Erreichen einer Kapazitätsgrenze des Auffangbehälters hinweisen und zyklisch nach einer gewissen, vorgegeben Anzahl an Getränkezubereitungen aktiviert werden.

Die Ausgabeeinheit kann dabei unabhängig vom sonstigen Zustand der Getränkezubereitungsvorrichtung immer aktiviert sein, solange Getränkesubstrat in dem Auffangbehälter angeordnet ist. Es kann aber auch vorgesehen sein, dass die Ausgabeeinheit nur dann aktiviert wird, wenn die Getränkezubereitungsvorrichtung automatisch oder benutzerseitig ausgeschaltet, bevorzugt in einen Standby-Zustand versetzt, werden soll und zu diesem Zeitpunkt noch Getränkesubstrat in dem Auffangbehälter angeordnet ist.

Die Ausgabeeinheit kann zum Beispiel als einfache LED und/oder als einfacher Lautsprecher, zum Beispiel als Piepser, ausgebildet sein. Vorteilhaft ist die Ausgabeeinheit mit minimalem Energieaufwand betreibbar und gleichzeitig gut erkenn oder wahrnehmbar. Bei einer zumindest teilweisen Ausgestaltung als optische Ausgabeeinheit kann vorgesehen sein, dass diese als Art einer Statusanzeige, bevorzugt mit bildlichen Inhalten, wie etwa Piktogrammen, ausgebildet ist, die gemeinsam auf den Zustand des Auffangbehälters und die Notwendigkeit zu dessen Leerung hinweisen. Bei einer zumindest teilweisen Ausgestaltung als akustische Ausgabeeinheit kann vorgesehen sein, dass ein Hinweissignal sich über die Zeit ändert, beispielsweise lauter wird. Dadurch kann sehr effektiv erreicht werden, dass die Leerung des Auffangbehälters vorgenommen wird.

Beispielhaft kann vorgesehen sein, dass die Ausgabeeinheit eine Benutzerinteraktion im Sinne einer "Snooze-Funktion" eines Weckers ermöglicht, in der der Benutzer die Ausgabeeinheit zeitweise deaktivieren kann, ohne den Auffangbehälter zu entleeren, dies aber dazu führt, dass nach einer vorgegebenen Zeit die Ausgabeeinheit wieder aktiviert wird. Dadurch kann der Benutzer vorteilhaft erneut erinnert werden, wenn zum Beispiel im Moment einer früheren Aktivierung der Ausgabeeinheit keine Zeit zur Entleerung des Auffangbehälters zur Verfügung steht.

Der Begriff der Ausgabeeinheit der vorliegenden Beschreibung soll so verstanden werden, dass ein aktive Ausgabe optischer oder akustischer Art erzeugbar ist, die wiederum von einem Nutzer oder Bediener wahrnehmbar ist. Es sollen also Einheiten als Ausgabeeinheiten verstanden werden, die zur eigenständigen Erzeugung eines akustischen und/oder optischen Wellensignals eingerichtet sind. Mit anderen Worten ausgedrückt bedeutet dies, dass die Ausgabeeinheit ein Ton- und/oder Lichtsignal erzeugt und abgibt. Zum Beispiel kann ein Lautsprecher, ein Körperschallwandler, ein Summer oder ein Leuchtmittel, wie etwa eine LED, als Ausgabeeinheit verstanden werden. Als Abgrenzung zur Ausgabeeinheit soll eine mitunter optisch wahrnehmbare Messeinrichtung verstanden werden. Als solche Messeinrichtung kommt zum Beispiel ein Schwimmer, Schwimmkörper, Auftriebskörper oder Sichtfenster mit Skala in Frage, die beispielsweise auf einer Flüssigkeitsoberfläche schwimmen oder trieben oder den Stand der Flüssigkeitsoberfläche erkennbar machen. Derartige Messeinrichtungen sind zwar optisch durch einen Nutzer oder Bediener wahrnehmbar erzeugen aber keine Ausgabe, insbesondere kein Ton- und/oder Lichtsignal und sollen daher nicht als Ausgabeeinheiten verstanden werden.

Die Erfindung basiert folglich auf der Grundidee, dass mit einem verhältnismäßig geringen technischen Aufwand, der sowohl technisch leicht zu realisieren ist und zudem nur äußerst wenig Energie im Betrieb verbraucht, eine effektive Schimmelvermeidung oder Pilzvermeidung erreicht werden kann, wenn der Benutzer einfach und effektiv über an die Entleerung des Auffangbehälters erinnert wird.

Als erfindungsgemäße Getränkezubereitungsvorrichtung kommen, wie eingangs bereits dargestellt, unterschiedliche Getränkezubereitungsvorrichtungen, beispielsweise Kaffee- und/oder Espressomaschinen, Teemaschinen oder dergleichen infrage. Die Erfindung kann dabei vorteilhaft sowohl bei solchen Geräten oder Systemen zum Einsatz kommen, bei denen das Getränkesubtrat lose als auch vorportioniert, beispielsweise in Form von Kapseln, Pots, Pads oder dergleichen zum Einsatz kommt.

Die Öffnung oder die Öffnungsflächen können entweder auch zu dem Zweck vorgesehen sein, um feuchtes Getränkesubstrat nach einem Getränkebezug oder einem Getränkeherstellungsprozess, bevorzugt aus einer Brüheinheit, in den Auffangbehälter zu überführen. Alternativ oder zusätzlich können jedoch auch Öffnungen oder Öffnungsflächen vorgesehen sein, die hauptsächlich oder ausschließlich dazu dienen, dass über die Öffnung oder Öffnungsflächen eine Feuchtigkeit aus dem Getränkesubstrat im Inneren des Auffangbehälters austreten kann.

Als Öffnungen oder Öffnungsflächen, die zum Austritt von Feuchtigkeit dienen, können beispielsweise gelochte Oberflächen, mit einem Netz versehene Oberflächen oder mit einer feuchtigkeitspermeablen Membran versehene Oberflächen des Auffangbehälters verwendet werden.

Vorteilhaft ist die Getränkezubereitungsvorrichtung als Vollautomat ausgebildet und umfasst wenigstens einen Teil der nachfolgend genannten Komponenten oder Baugruppen: einen Frischwasserbehälter, bevorzugt mitsamt Wasserfilter, eine Substratbevorratungseinheit, bevorzugt einen Bohnenbehälter, eine Mahleinheit, eine Heizvorrichtung, eine, bevorzugt entnehmbare, Brüheinheit, ein Milchmodul mit Mitteln zum Ansaugen, Erwärmen und/oder Aufschäumen von Milch, einen Restwasserbehälter.

Ein besonderer Vorteil der Erfindung liegt darin, dass mit der Hinweisfunktion der Ausgabeeinheit das Benutzerverhalten so verändert wird, dass die Wahrscheinlichkeit einer Pilzkontamination von vornherein minimiert wird und es damit überhaupt nicht zu der Situation kommt, in der sich Sporen in der Getränkezubereitungsvorrichtung ansammeln oder ausbilden können.

In einer ersten, vorteilhaften Ausgestaltung der Getränkezubereitungsvorrichtung kann vorgesehen sein, dass die die Ausgabeeinheit von einer Steuereinrichtung, insbesondere einer zentralen Recheneinheit, ansteuerbar ist, die zur Protokollierung von Getränkezubereitungen eingerichtet ist und die datentechnisch mit Erfassungsmitteln, bevorzugt elektrischen Kontakten, Schaltern und/oder Sensoren, verknüpft ist, mittels derer ein Zugriff auf den und/oder eine Entnahme des Auffangbehälters erfassbar oder plausibilisierbar ist.

Als Steuereinrichtung, insbesondere zentrale Recheneinheit, kann eine Steuereinheit dienen, die auch die sonstige Steuerung der Getränkezubereitungsvorrichtung verantwortet oder betreibt. Die Protokollierung von Getränkezubereitungen kann beispielsweise über einen Speicher erfolgen, der entweder intern oder extern zur Steuereinrichtung als Teil der Getränkezubereitungsvorrichtung ausgebildet sein kann. Die Protokollierung kann beispielsweise aber keinesfalls zwingend einen absoluten oder relativen Zeitpunkt der Getränkezubereitung, eine gemessene oder berechnete Menge an Getränkesubstrat der Getränkezubereitung und eventuell weitere Zubereitungs- und/oder Umgebungsparameter, wie beispielsweise Umgebungstemperatur, und/oder Volumen an Brühfluid, insbesondere Wasser, umfassen. Die datentechnischen Erfassungsmittel, die zur Erfassung eines Zugriffs auf den Auffangbehälter und/oder einer Entnahme des Auffangbehälters, besonders bevorzugt sogar eine Entleerung des Auffangbehälters erfassbar oder plausibilisierbar machen, können in grundsätzlich unterschiedlicher Art und Weise ausgebildet sein. Beispielsweise können bekannte und gattungsgemäße REED-Kontakte zum Einsatz kommen, um festzustellen, ob ein Restwasserbehälter oder eine Tropfschale zusammen mit dem Auffangbehälter geöffnet und/oder entnommen wurde. Dabei kann beispielsweise auch der Zeitraum erfasst werden, während dem die dazugehörige Kontaktierung unterbrochen ist/war. Es kann aber auch möglich sein, dass der Zugriff und/oder die Entnahme, insbesondere einschließlich einer Entleerung, des Auffangbehälters direkt und unmittelbar erfasst oder gemessen wird. Dazu können beispielsweise Sensoren in Form eines Gewichtsensors - Waage - optische oder strahlenbasierte Sensoren, beispielsweise in Form von Lichtschranken, 3D-Kameras oder dergleichen zum Einsatz kommen. Auch eine Feuchtigkeitsmessung in oder an dem Auffangbehälter kann als Erfassungsmittel zum Einsatz kommen. Alternativ oder zusätzlich kann auch eine Benutzereingabe, zum Beispiel an einem Knopf oder einem Touchdisplay als Erfassungsmittel, wonach der Auffangbehälter geleert wurde, zur Plausibilisierung herangezogen werden.

Durch die Protokollierung der Getränkezubereitungen auf der einen Seite und die Kenntnis oder Plausibilisierung des Zustandes des Auffangbehälters, insbesondere der Füllung des Auffangbehälters mit Getränkesubstrat, andererseits lässt sich in einfacher und effektiver Weise die Aktivierung der Ausgabeeinheit steuern. Wenn beispielsweise nach einem einzelnen Getränkebezug oder einer einzelnen Getränkezubereitung oder nach mehreren Getränkezubereitungen kein Zugriff und/oder keine Entnahme des Auffangbehälters erfassbar oder plausibilisierbar ist, dann kann die Ausgabeeinheit aktiviert werden. Die Ausgabeeinheit bleibt dann vorteilhaft solange aktiv, bis die Getränkezubereitungsvorrichtung vom elektrischen Versorgungsnetz getrennt wird oder eine Entnahme und/oder ein Zugriff auf den Auffangbehälter, bevorzugt zusammen mit einer Entleerung des Auffangbehälters, erfasst wird oder anhand der Erfassungsmittel als plausibel angenommen werden kann.

**IN** einer weiteren besonders vorteilhaften Ausgestaltung kann vorgesehen sein, dass die Ausgabeeinheit dauerbetriebsfähig ausgebildet ist, solange eine Netzverbindung der Getränkezubereitungsvorrichtung zu einem elektrischen Versorgungsnetz besteht. Mit anderen Worten ausgedrückt bedeutet dies, dass die Ausgabeeinheit, insbesondere im Hinblick auf die elektrische Versorgung und/der Verschaltung so ausgebildet und/oder mit einem Netzteil der Getränkezubereitungsvorrichtung verbunden ist, dass die Ausgabeeinheit auch noch betreibbar oder betriebsfähig ist, wenn beispielsweise ein Gerätehauptschalter der Getränkezubereitungsvorrichtung deaktiviert wurde und die Getränkezubereitungsvorrichtung sich folglich nicht mehr in einem betriebsbereiten Zustand befindet, sondern in einem "Standby-Zustand" befindlich ist. Dies ist besonders vorteilhaft, weil sich im Rahmen der Erfindung herausgestellt hat, auch wenn der Benutzer nicht sofort oder unmittelbar auf die Ausgabeeinheit reagiert und das Getränkesubstrat aus dem Auffangbehälter entfernt, eine Pilzkontamination und/oder Schimmelkontamination noch recht gut verhindert werden kann, wenn die Verweildauer von Getränkesubstrat im Inneren minimiert werden kann. Da es bei gattungsgemäßen Getränkezubereitungsvorrichtungen oftmals vorgesehen ist, dass die Getränkezubereitungsvorrichtung automatisch nach einem letzten Getränkebezug, beispielsweise 5 Minuten nach einem Getränkebezug oder 10 Minuten nach einem Getränkebezug, in den "Standby-Zustand" versetzt wird, ist es besonders vorteilhaft, wenn auch im "Standby-Zustand" die Ausgabeeinheit weiter betriebsfähig bleibt und betrieben wird, um auch in diesem Zustand der den Benutzer auf den Vorteil einer Entleerung des Auffangbehälters hinzuweisen. Vorteilhaft kann die Ausgabeeinheit über mehrere Stunden, gegebenenfalls sogar über mehrere Tage aktiviert bleiben, solange eine elektrische Verbindung oder Netzverbindung der Getränkezubereitungsvorrichtung zu einem elektrischen Versorgungsnetz bestehen bleibt.

In einer weiteren, besonders vorteilhaften Ausgestaltung der Getränkezubereitungsvorrichtung kann vorgesehen sein, die Steuereinrichtung dazu eingerichtet ist die Funktionsweise der Getränkezubereitungsvorrichtung zu beeinflussen, solange ermittelt oder plausibilisiert ist, dass Getränkesubstrat in dem Auffangbehälter angeordnet ist. Zum Beispiel kann vorgesehen sein, dass während eines betriebsbereiten Zustand - als Abgrenzung zu einem Standby-Zustand - der Getränkezubereitungsvorrichtung eine weitere Anzeige, bevorzugt eine Hauptbedienanzeige, zusätzlich zu der oder statt der Ausgabeeinheit eine Aufforderung zur Leerung des Auffangbehälters ausgibt. Alternativ oder zusätzlich kann eine zeitgesteuerte Überführung in den Standby-Zustand angepasst werden, wenn die Anwesenheit von Getränkesubstrat im Auffangbehälter gegeben oder plausibel ist. Weiter kann auch bei einem aktiven Ausschalten der Getränkezubereitungsvorrichtung, zum Beispiel über einen Gerätehauptschalter, ein angepasstes Ausschalten vorgenommen werden, wenn die Anwesenheit von Getränkesubstrat im Auffangbehälter gegeben oder plausibel ist.

Die oben genannte Aufgabe wird auch durch ein Verfahren zum Betrieb einer Getränkezubereitungsvorrichtung mit einem Auffangbehälter für, insbesondere loses oder portioniertes, feuchtes Getränkesubstrat, welche eine Öffnung oder Öffnungsfläche aufweist gelöst. Erfindungsgemäß sind dabei die folgenden Verfahrensschritte vorgesehen:
Erkennen und/oder Überwachen von einer Anwesenheit von feuchtem Getränkesubstrat in dem Auffangbehälter.

Aktivieren einer, bevorzugt akustischen und/oder optischen, Ausgabeeinheit, mittels der ein akustisches oder optisches Signal ausgegeben wird, wenn und/oder solange im Auffangbehälter Getränkesubstrat angeordnet ist.

Dadurch wird in vorteilhafterweise die Kontamination der Getränkezubereitungsvorrichtung mit Pilzen, insbesondere mit Schimmelpilzen von vornherein vermieden und somit folglich auch eine anschließende Problematik der Kontamination mit Schimmelsporen oder Pilzsporen verhindert, da der Nutzer effektiv zur Leerung des Auffangbehälters aufgefordert wird.

Darüber hinaus wird hinsichtlich der Vorteile, vorteilhaften Wirkungen und Leistungen des erfindungsgemäßen Betriebsverfahrens auf die vorangehende Offenbarung zur erfindungsgemäßen Getränkezubereitungsvorrichtung verwiesen.

Besonders erwähnenswert ist der Umstand, dass die Aktivierung der Ausgabeeinheit wenn und/oder solange im Auffangbehälter Getränkesubstrat angeordnet ist, nicht so verstanden werden muss, dass zeitlich unmittelbar anschließend, wenn Getränkesubstrat in den Auffangbehälter gelangt, die Aktivierung stattfinden muss. Dies ist zwar möglich, es kann aber auch ein zeitlicher Versatz bis zur Aktivierung der Ausgabeeinheit vorteilhaft vorgesehen sein. Dies ermöglicht beispielsweise, dass die, bevorzugt separate, von anderen Ausgabeschnittstellen getrennte, Ausgabeeinheit erst aktiviert wird, wenn die Getränkezubereitungsvorrichtung in einen Standby-Zustand versetzt wird.

In einer vorteilhaften Ausführungsform des Verfahrens kann vorgesehen sein, dass die die Ausgabeeinheit von einer Steuereinrichtung, insbesondere einer zentralen Recheneinheit, angesteuert wird, die zur Protokollierung von Getränkezubereitungen eingerichtet ist und die datentechnisch mit Erfassungsmitteln, bevorzugt elektrischen Kontakten, Schaltern und/oder Sensoren, verknüpft ist, mittels derer ein Zugriff auf den und/oder eine Entnahme des Auffangbehälters erfasst oder plausibilisiert wird. Bezüglich der Vorteile wird auf die Beschreibung der Getränkezubereitungsvorrichtung verwiesen.

In einer vorteilhaften Ausführungsform des Verfahrens kann vorgesehen sein, dass die Ausgabeeinheit im Anschluss and die Aktivierung dauerhaft betrieben wird, solange eine Netzverbindung der Getränkezubereitungsvorrichtung zu einem elektrischen Versorgungsnetz besteht. Dadurch wird vorteilhaft ermöglicht, dass der Hinweis an den Benutzer unabhängig von sonstigen Betriebszuständen ausgegeben werden kann.

In einer weiteren, besonders vorteilhaften Ausgestaltung des Verfahrens kann vorgesehen sein, dass die Steuereinrichtung die Funktionsweise der Getränkezubereitungsvorrichtung beeinflusst, solange ermittelt oder plausibilisiert wird, dass Getränkesubstrat in dem Auffangbehälter angeordnet ist. Damit kann zum Beispiel erreicht werden, dass auch weitere Maßnahmen zur Vermeidung oder Minimierung von Schimmel- oder Pilzverbreitung ergriffen werden.

In einer weiteren besonders vorteilhaften Ausgestaltung des Verfahrens kann vorgesehen sein, dass die Ausgabeeinheit aktiviert wird oder aktiviert bleibt, wenn die Getränkezubereitungsvorrichtung, insbesondere selbsttätig, in einen Standby-Zustand überführt wird. Das ermöglicht, dass der Nutzer langfristig bzw. Dauerhaft daran erinnert wird, dass eine Entleerung des Auffangbehälters vorteilhaft ist.

Die Erfindung wird nachfolgend anhand von, rein schematischen, lediglich Ausführungsbeispiele darstellenden Figuren beispielhaft erläutert.

### Darin zeigen:

- Fig. 1:: eine schematische Darstellung einer erfindungsgemäßen Getränkezubereitungsvorrichtung;
- Fig. 2:: eine beispielhafte Darstellung eines Ablaufschemas eines erfindungsgemäßen Verfahrens.

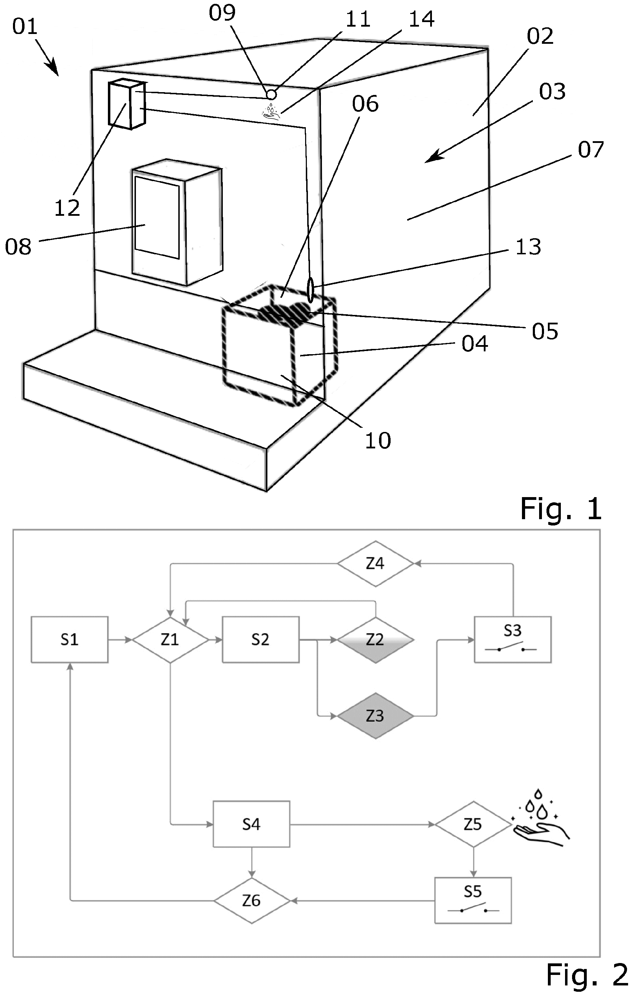

Fig. 1 zeigt eine schematische Getränkezubereitungsvorrichtung 01. Die Getränkezubereitungsvorrichtung 01 ist mit einem transparenten Gehäuse 02 dargestellt, das einen Blick ins Innere der Getränkezubereitungsvorrichtung 01 ermöglicht. Aus Gründen der Übersichtlichkeit sind ein Großteil der Komponenten in einem Innenraum 03 des Gehäuses 02 nicht dargestellt. So sind zum Beispiel eine Brüheinheit, ein Fluidsystem einschließlich eines Fluidbevorratungsbehälters und eines Fluidauffangbehälters, ein Getränkesubstratvorratsbehälter, eine Mahleinheit und dergleichen nicht im Detail dargestellt.

Im Innenraum 03 des Gehäuses 02 ist ein Auffangbehälter 04 angeordnet in dem feuchtes Getränkesubstrat 05 zwischengelagert oder bevorratet wird. Das feuchte Getränkesubstrat 05, was beispielsweise aufgebrühtes oder ausgelaugtes Kaffeebohnenmehl enthalten oder aufweisen kann, wird regelmäßig von einer Brüheinheit nach einem Brühprozess oder einer Getränkezubereitung ausgeworfen oder ausgegeben und gelangt von der Brüheinheit in den Auffangbehälter 04. Der Auffangbehälter 04 umfasst eine Öffnung 06. Die Öffnung 06 dient auch zur Aufnahme oder Überführung des Getränkesubstrats 05 in den Auffangbehälter 04.

Der Auffangbehälter 04 könnte alternativ oder zusätzlich im Bereich von Seitenflächen 07 weitere Öffnungsflächen umfassen, die einen Luft- und/oder Feuchtigkeitsaustausch ermöglichen. Dazu könnten beispielsweise in den Seitenflächen 07 feinmaschige Netze, Gitter, oder luft- und/oder wasserpermeable oder semipermeable Membranen vorgesehen sein.

Das Gehäuse 02 umfasst eine Multifunktions-Ausgabeschnittstelle 08, zum Beispiel ein Touchdisplay und eine erfindungsgemäße Ausgabeeinheit 11. Die Ausgabeeinheit 11 kann eine LED 09 und ein Piktogramm 14 umfassen, die Zusammen anzeigen, dass eine Entleerung des Auffangbehälters 04 vorteilhaft ist. Die Multifunktions-Ausgabeschnittstelle 08 kann vorteilhaft eine Vielzahl von Ausgaben generieren, zum Beispiel auch eine Ausgabe, wenn im Betrieb der Getränkezubereitungsvorrichtung 01 eine Kapazitätsgrenze des Auffangbehälters auf Grund einer vorgegebenen Anzahl an Getränkezubereitungen erreicht wird.

In dem Gehäuse 02 können, wie gattungsgemäß bereits bekannt, in den Wandelementen 10 ebenfalls Öffnungen, beispielsweise Löcher, Schlitze oder Gitter vorgesehen sein, die ermöglichen, Feuchtigkeit aus dem Gehäuse 02 austritt. Dieser Abtransport ist jedoch regelmäßig nicht ausreichend, um eine Kontamination und Vermehrung von Pilzen und Pilzsporen zu vermeiden, daher ermöglicht die Ausgabeeinheit in besonders vorteilhafter Weise eine Veranlassung des Benutzers zu einer möglichst regelmäßigen Entleerung der Auffangbehälters 04.

Besonders bevorzugt ist die Ausgabeeinheit 11 mit einem sehr geringen elektrischen Verbrauch betreibbar, sodass der Betrieb der Ausgabeeinheit 11 keinen merklichen Energieverbrauch verursacht und vorteilhaft auch in einem Standby-Zustand möglich ist, ohne dass Energiesparvorschriften missachtet werden. Beispielsweise kann die Ausgabeeinheit 11 als sparsame, separate optische Ausgabeeinheit 11, beispielsweise eine einzelne LED ausgefertigt oder ausgebildet sein. Dementsprechend kann sich die Ausgabeeinheit 11 von einer sonstigen Multifunktions-Ausgabeschnittstelle 08 unterscheiden, der im Betrieb der Getränkezubereitungsvorrichtung 01 für sonstige optische Ausgaben, und gegebenenfalls Eingaben, genutzt wird.

Die Getränkezubereitungsvorrichtung 01 kann ferner eine Steuereinrichtung 12 aufweisen, die beispielsweise einen Speicher umfasst, mit den Getränkezubereitungen protokolliert werden können. Zudem kann die Steuereinrichtung datentechnisch mit Erfassungsmitteln 13 verknüpft sein, die beispielsweise als elektrische Kontakte, Schalter und/oder Sensoren ausgebildet sein können, wobei die Erfassungsmittel dazu dienen einen Zugriff auf den Auffangbehälter 04 und/oder eine Entnahme des Auffangbehälters 04 zu erfassen oder zumindest zu plausibilisieren. Die Steuereinrichtung 12 kann zudem so der Ausgabeeinheit 11 verbunden, insbesondere elektrisch und/oder datentechnisch verbunden sein, dass die Steuereinrichtung 12 die Ausgabeeinheit steuern kann. Zur Steuerung kann bevorzugt die Aktivierung, die Deaktivierung, eine Einschaltverzögerung und/oder die Vorgabe oder Berechnung einer Betriebsdauer, insbesondere einer ununterbrochenen Betriebsdauer, zählen.

Die Steuerung der Ausgabeeinheit wird insbesondere abhängig von der Protokollierung von Getränkezubereitungen und dem Erfassen von Zugriffen auf den und/oder Entnahmen des Auffangbehälters 04 vorgenommen. So kann beispielsweise die Ausgabeeinheit ausgeschaltet bleiben oder deaktiviert bleiben, solange festgestellt wird oder erfasst wird, dass der Auffangbehälter 04 leer ist und kein feuchtes Getränkesubstrat 05 enthält oder aufweist. Wird jedoch eine Getränkezubereitung protokolliert, und im Anschluss daran keine Entnahme des Auffangbehälters 04 oder ein Zugriff auf den Auffangbehälter 04 erfasst oder plausibilisiert, kann die Steuereinrichtung 12 die Ausgabeeinheit zeitlich unmittelbar der zeitversetzt aktivieren.

Die Steuereinrichtung kann die Ausgabeeinheit 11 wieder deaktivieren sobald während des Betriebs der Ausgabeeinheit 11 über die Erfassungsmittel 13 festgestellt wird oder plausibilisiert wird, dass ein Zugriff auf den Auffangbehälter 04 stattgefunden hat.

Die Plausibilisierung eines Zugriffs auf den Auffangbehälter 04 oder einer Entnahme des Auffangbehälters 04 kann beispielsweise so erfolgen, dass der Auffangbehälter 04 zusammen mit einem nicht im Detail dargestellten Fluidauffangbehälter, bevorzugt einer Tropfschale oder einem Restwasserbehälter, über eine Art Schubladen-Lösung entnehmbar ist. Wenn die Erfassungsmittel 13 beispielsweise die Entnahme der Tropfschale erfassen und weiterhin festgestellt wird, dass die Tropfschale für eine gewisse Mindestzeit, beispielsweise 30 Sekunden, entnommen bleibt, kann davon ausgegangen werden, dass nicht nur die Tropfschale entnommen und gegebenenfalls geleert wurde, sondern dass im gleichen Zug auch die Entleerung des Auffangbehälters 04 stattgefunden hat und somit ein leerer Auffangbehälter nach Wiedereinsetzen der Restwasserschale oder Tropfwasserschale plausibel ist. Die Erfassungsmittel 13 können alternativ jedoch auch unmittelbar die Anwesenheit von Getränkesubstrat in dem Auffangbehälter überwachen oder erfassen, bevorzugt messen. Weiter alternativ oder zusätzlich kann die Plausibilisierung auch eine Eingabe eines Benutzers umfassen, mit der über eine Eingabeschnittstelle, beispielsweise ein Knopf oder das Multifunktions-Ausgabeschnittstelle 08, bestätigt wird, dass die der Auffangbehälter 04 geleert wurde.

In der Fig. 2 ist ein beispielhafter Ablauf eines erfindungsgemäßen Betriebsverfahrens zum Betrieb einer Getränkezubereitungsvorrichtung dargestellt. Zu Beginn des Verfahrens liegt zum Beispiel ein normaler Standby-Zustand Z6 vor, der erreicht wird, wenn die Getränkezubereitungsvorrichtung zwar mit einem elektrischen Versorgungsnetz verbunden ist, aber keine Getränkezubereitungen möglich sind. In einem ersten Verfahrensschritt S1 kann ausgehend von dem Standby-Zustand über Betätigung eines Hauptschalters die Getränkezubereitungsvorrichtung in einen betriebsbereiten Zustand überführt werden. Dabei können beispielsweise Aufheizvorgänge, Spülvorgänge und dergleichen durchgeführt werden. Anschließend wir ein Zustand Z1 erreicht, in dem die Betriebsbereitschaft der Getränkezubereitungsvorrichtung gegeben ist. hergestellt. Anschließend kann beispielsweise in einem Verfahrensschritt S2 eine Getränkezubereitung erfolgen. Im Anschluss an die Getränkezubereitung des Verfahrensschritt S2 kann beispielsweise durch tatsächliches Messen/Erfassen oder durch Hochzählen oder Protokollieren der Getränkezubereitungen ermittelt oder abgeschätzt werden, ob ein Auffangbehälter teilweise mit Getränkesubstrat gefüllt ist oder bereits vollständig mit Getränkesubstrat gefüllt ist. Wenn der Auffangbehälter vollständig mit Getränkesubstrat gefüllt ist, wird in einem Verfahrensschritt Z3, bevorzugt über die Multifunktions-Ausgabeschnittstelle, eine Aufforderung an den Benutzer ausgegeben den Auffangbehälter zu entleeren. Bis eine Entleerung des Auffangbehälters im Verfahrensschritt S3 stattfindet, können Teile der Funktionen der Getränkezubereitungsvorrichtung, beispielsweise Getränkezubereitungen, gesperrt oder deaktiviert bleiben.

Wenn ein Zustand Z2 festgestellt wird, dass der Auffangbehälter nur teilweise gefüllt ist oder im Zustand Z4 festgestellt wird, dass eine Entleerung des Auffangbehälters stattgefunden hat, kann die Getränkezubereitungsvorrichtung wieder in den grundsätzlichen, betriebsbereiten Zustand Z1 zurückkehren. Für den Fall, dass der Hauptschalter zum Ausschalten der Getränkezubereitungsvorrichtung betätigt wird oder aufgrund einer Zeitschaltfunktionalität oder eines Timers eine automatische Ausschaltung erfolgt, kann im Verfahrensschritt S4 eine Überführung von dem betriebsbereiten Zustand zu dem Standby-Zustand eingeleitet werden. Wenn über die Protokollierung der Getränkezubereitung und die Erfassungsmittel im Vorfeld festgestellt wurde, dass ein entleerter Auffangbehälter zum Zeitpunkt des Übergangs in den Standby-Zustand vorliegt, kann die Ausgabeeinheit deaktiviert bleiben und ein Zustand Z6 herbeigeführt werden. Wird jedoch zum Zeitpunkt des Übergangs in den Standby-Zustand ein teilweise oder vollständig gefüllter Auffangbehälter erfasst oder plausibilisiert, kann die Steuereinrichtung die Ausgabeeinheit aktivieren. Dann kann ein beispielsweise ein Zustand Z5 erreicht werden, der als Hinweismodus oder Hinweis-Standby-Zustand betitelt werden kann und der sich im Wesentlichen durch eine, bevorzugt dauerhaft aktivierte Ausgabeeinheit, bevorzugt bei gleichzeitiger Inaktivität der Multifunktions-Ausgabeschnittstelle, vom normalen Standby-Zustand Z6 unterscheidet. Die Ausgabeeinheit kann dann solange aktiv bleiben, bis im Verfahrensschritt S5 eine Entleerung, beispielsweise über einen Zugriff auf den Auffangbehälter und/oder eine Entnahme des Auffangbehälters erfasst oder plausibilisiert wird. Dies kann vorteilhaft auch im Standby-Zustand erfolgen und überführt dann - insbesondere gesteuert von der Steuereinrichtung - zum normalen Standby-Zustand Z6.

Im Beispiels der Fig. 2 ist das Betriebsverfahren so dargestellt, dass die Aktivierung der Ausgabeeinheit lediglich im Zusammenhang mit dem Übergang zwischen dem betriebsbereiten Zustand Z1 und dem Standby-Zustand Z6 erfolgt. Es kann jedoch das Verfahren auch so realisiert werden, dass unmittelbar im Anschluss an eine Getränkezubereitung, solange die Getränkezubereitungsvorrichtung noch im betriebsbereiten Zustand Z1 ist, aber noch kein Zugriff auf den Auffangbehälter oder eine Entnahme des Auffangbehälters erfasst oder plausibilisiert wurde, die Ausgabeeinheit bereits aktiviert wird und dann aktiviert bleibt, unabhängig davon, ob der Standby-Zustand Z6 aktiviert wird, oder der betriebsbereite Zustand Z1 beibehalten wird.

### Bezugszeichen

- 01: Getränkezubereitungsvorrichtung
- 02: Gehäuse
- 03: Innenraum
- 04: Auffangbehälter
- 05: Getränkesubstrat
- 06: Öffnung
- 07: Seitenflächen
- 08: Multifunktions-Ausgabeschnittstelle
- 09: LED
- 10: Wandelementen
- 11: Ausgabeeinheit
- 12: Steuereinrichtung
- 13: Erfassungsmitteln
- 14: Piktogramm

## Patentansprüche

1. Getränkezubereitungsvorrichtung (01) mit einem Auffangbehälter (04) für, insbesondere loses oder portioniertes, feuchtes Getränkesubstrat (05), wobei der Auffangbehälter eine Öffnung (06) aufweist oder Öffnungsflächen umfasst, über die der Auffangbehälter (04) mit einem Innenraum (03) der Getränkezubereitungsvorrichtung (01) in Verbindung steht,
**gekennzeichnet durch**
eine, bevorzugt akustische und/oder optische, Ausgabeeinheit (11), mittels der ein akustisches oder optisches Signal ausgebbar ist, wenn und/oder solange im Auffangbehälter (04) Getränkesubstrat (05) angeordnet ist.

2. Getränkezubereitungsvorrichtung (01) nach Anspruch 1,
**dadurch gekennzeichnet,**
**dass** die die Ausgabeeinheit von einer Steuereinrichtung (12), insbesondere einer zentralen Recheneinheit, ansteuerbar ist, die zur Protokollierung von Getränkezubereitungen eingerichtet ist und die datentechnisch mit Erfassungsmitteln (13), bevorzugt elektrischen Kontakten, Schaltern und/oder Sensoren, verknüpft ist, mittels derer ein Zugriff auf den und/oder eine Entnahme des Auffangbehälters (04) erfassbar oder plausibilisierbar ist.

3. Getränkezubereitungsvorrichtung (01) nach Anspruch 1 oder 2,
**dadurch gekennzeichnet,**
**dass** die Ausgabeeinheit (11) dauerbetriebsfähig ausgebildet ist, solange eine Netzverbindung der Getränkezubereitungsvorrichtung (01) zu einem elektrischen Versorgungsnetz besteht.

4. Getränkezubereitungsvorrichtung (01) nach Anspruch 2 oder 3,
**dadurch gekennzeichnet,**
**dass** die Steuereinrichtung (12) dazu eingerichtet ist, die Funktionsweise der Getränkezubereitungsvorrichtung zu beeinflussen, solange ermittelt oder plausibilisiert ist, dass Getränkesubstart (05) in dem Auffangbehälter (04) angeordnet ist.

5. Verfahren zum Betrieb einer Getränkezubereitungsvorrichtung (01) mit einem Auffangbehälter (04) für, insbesondere loses oder portioniertes, feuchtes Getränkesubstrat (05), wobei der Auffangbehälter (04) eine Öffnung (06) aufweist oder Öffnungsflächen umfasst, **gekennzeichnet durch**
die folgenden Verfahrensschritte:
- Erkennen und/oder Überwachen von einer Anwesenheit von feuchtem Getränkesubstrat (05) in dem Auffangbehälter (04);
- Aktivieren einer, bevorzugt akustischen und/oder optischen, Ausgabeeinheit (11), mittels der ein akustisches oder optisches Signal ausgegeben wird, wenn und/oder solange im Auffangbehälter (04) Getränkesubstrat (05) angeordnet ist.

6. Verfahren nach Anspruch 5,
**dadurch gekennzeichnet,**
**dass** die die Ausgabeeinheit (11) von einer Steuereinrichtung (12), insbesondere einer zentralen Recheneinheit, angesteuert wird, die zur Protokollierung von Getränkezubereitungen eingerichtet ist und die datentechnisch mit Erfassungsmitteln (13), bevorzugt elektrischen Kontakten, Schaltern und/oder Sensoren, verknüpft ist, mittels derer ein Zugriff auf den und/oder eine Entnahme des Auffangbehälters (04) erfasst oder plausibilisiert wird.

7. Verfahren nach Anspruch 5 oder 6,
**dadurch gekennzeichnet,**
**dass** die Ausgabeeinheit (11) im Anschluss and die Aktivierung dauerhaft betrieben wird, solange eine Netzverbindung der Getränkezubereitungsvorrichtung (01) zu einem elektrischen Versorgungsnetz besteht.

8. Verfahren nach Anspruch 6 oder 7,
**dadurch gekennzeichnet,**
**dass** die Steuereinrichtung (12) die Funktionsweise der Getränkezubereitungsvorrichtung (01) beeinflusst, solange ermittelt oder plausibilisiert wird, dass Getränkesubstart (05) in dem Auffangbehälter (04) angeordnet ist.

9. Verfahren nach einem der Ansprüche 6 bis 8,
**dadurch gekennzeichnet,**
**dass** die Ausgabeeinheit aktiviert wird oder aktiviert bleibt, wenn die Getränkezubereitungsvorrichtung (01), insbesondere selbsttätig, in einen Standby-Zustand (Z6) überführt wird.
